# EUROPÄISCHE PATENTSCHRIFT

(11) **EP 1 685 904 B1**
(45) Veröffentlichungstag und Bekanntmachung des Hinweises auf die Patenterteilung: **10.08.2011**
(21) Anmeldenummer: 06001208.5
(22) Anmeldetag: 20.01.2006
(51) Int. Cl.: B01L 9/02

(54) **Versorgungssystem zur Bereitstellung von Medien an Arbeitsplätzen**
System for supply of media at a workplace
Dispositif pour fournir des médias à un poste de travail

(30) Priorität: 27.01.2005 DE 102005003712
(43) Veröffentlichungstag der Anmeldung: 02.08.2006
(73) Patentinhaber: Laborbau Systeme Hemling GmbH, 48683 Ahaus (DE)
(72) Erfinder: Hemling, Bernd, 48683 Ahaus (DE)
(74) Vertreter: Grosse, Rainer

(56) Entgegenhaltungen:
- EP-A2- 1 389 707
- DE-A1- 3 232 625
- DE-A1- 3 344 677
- DE-A1- 10 135 938
- DE-A1- 10 243 773
- DE-B4- 10 107 912
- DE-U1- 8 304 407
- US-A- 6 095 660

## Beschreibung

Die Erfindung betrifft ein Versorgungssystem zur Bereitstellung von Medien an Arbeitsplätzen gemäß Anspruch 1.

Aus dem deutschen Gebrauchsmuster 20 121 189 U1 ist ein Versorgungssystem der eingangs genannten Art bekannt. Das bekannte Versorgungssystem weist mindestens einen Deckenkanal auf, an dem Medienanschlüsse aufweisende Säulen jeweils um eine horizontale Achse verschwenkbar gelagert sind. Durch die Verschwenkbarkeit der Säulen können die Medienanschlüsse aus einer in Übergreifhöhe befindlichen Parkstellung in eine Arbeitsstellung heruntergeschwenkt werden, sodass sie sich in Greifhöhe befinden und daher für eine sich an einem Arbeitsplatz aufhaltenden Person zugänglich sind. Ein entsprechendes Versorgungssystem ist ferner aus der DE 101 07 912 B4 bekannt. Die bekannten Versorgungssysteme sind aufgrund der vielen beweglichen Teile relativ störungsanfällig und erfordern ferner aufgrund der Vielzahl der zu den Medienanschlüssen führenden Medientransportleitungen, die aufgrund der Verschwenkbarkeit flexibel ausgebildet sein müssen, einen hohen Bauaufwand.

Aus der US 6 095 660 A ist eine Befestigungsvorrichtung bekannt, die in einer Öffnung einer Decke eines Raumes angeordnet werden kann und an der dreh- und kippbar eine Lichtschiene an einem Ende gehalten ist. Das andere Ende der Lichtschiene wird mittels einer Seilabspannung an der Decke des Raumes gehalten. Die Lichtschiene ist mit Strahlern bestückt, um den Raum in gewünschter Art und Weise auszuleuchten. Je nach gewählter Seillänge der Sellabspannung kann die Lichtschiene parallel zur Decke oder aber auch in einem Winkel zur Decke manuell Installiert werden.

Aus der DE 101 35 938 A1 ist eine gitterartige, aus Trägern bestehende Konstruktion bekannt, wobei die Träger an ihren Kreuzungsstellen von Verbindungsstücken gehalten werden. Die Verbindungsstücke lassen sich mittels dünner Seile an der Decke eines Raumes befestigen. Erst dann werden die Träger an den Verbindungsstücken befestigt, um die Gitterkonstruktion zu schaffen. Innerhalb der Träger können elektrische Versorgungsleitungen verlaufen, die zu Lampen führen, welche an den Trägem befestigbar sind. Die Verbindungsstücke werden vorzugsweise mittels eines Laser-Messgeräts auf ein und derselben Höhe angeordnet, sodass die gesamte Gitterkonstruktion eine perfekt horizontal hängende Lage einnimmt. Sofern dennoch einzelne Verbindungsstücke nach Fertigstellung der Gesamtanordnung eine Höhenabweichung aufweisen, lassen sich die betroffenen Seillängen geringfügig mittels Seilklemmverbindungen korrigieren, indem diese kurzzeitig manuell geöffnet, die Seillänge korrigiert und dann wieder geschlossen werden.

Aus der DE 102 43 773 A1 ist eine Antriebseinrichtung für einen Stangenleuchtenhänger bekannt. An einem solchen Stangenleuchtenhänger können Scheinwerfer, Leuchten, Scanner und so weiter befestigt werden. Zur Höhenverstellung des Stangenleuchtenhängers ist an ihm ein Getriebemotor mit Sellaufwicklungselementen vorgesehen, auf die Tragseile auf- und abwickelbar angeordnet sind, welche an der Decke eines Raumes befestigt werden. Werden die Seilaufwicklungselemente mittels des Getriebemotors betätigt, so kann der Stangenleuchtenhänger zusammen mit den daran befestigten Scheinwerfern und so weiter in der Höhe verlagert werden.

Aus der DE 33 44 677 A1 ist eine Pendelleuchte bekannt, die zwischen zwei Seilaufhängungen ein Lichtrohr aufweist, das Endstücke besitzt, die ein Verdrehen des Lichtrohres gestatten, um den Lichteinfall innerhalb eines bestimmten Winkelbereichs einstellen zu können. Die beiden Seilaufhängungen können einzeln in der jeweiligen Seillänge manuell eingestellt werden.

Aus der DE 32 32 625 A1 ist eine Aufhängevorrichtung für eine Großflächenleuchte bekannt, wobei die Großflächenleuchte Seilrollen aufweist, über die Befestigungsseile geführt sind, mit denen die Großflächenleuchte an der Decke eines Raumes gehalten ist. Ein Ende Jedes Befestigungsseils ist fest an der Decke angeordnet, während das zugehörige andere Ende um einen Wickelkörper gewickelt ist, der sich an der Decke befindet. Durch Verdrehen des Wickelkörpers lässt sich die Großflächenleuchte auf einfache Weise anheben, schrägstellen oder absenken.

Aus der EP 1 389 707 A2 ist eine Leitungsführung bei einem Deckenstativ mit verschwenkbaren Stativabschnitten bekannt. Das Deckenstativ besitzt zwei Schwenkarme, um eine Aufnahme für ein zu haltendes medizinisches Gerät oder dergleichen zu ermöglichen. Befindet sich die Aufnahme in einer höchstmöglichen Position, so verlaufen die beiden Arme parallel zueinander, wird die Aufnahme nach unten händisch heruntergezogen, so nehmen die beiden Arme eine V-Stellung relativ zueinander ein. Innerhalb der Arme können elektrische Leitungen verlaufen.

Aus der DE 83 04 407 U1 geht ein Deckenstativ hervor, das an einem horizontal verfahrbaren Deckenlaufwagen eine vertikal verlaufende Gerätesäule aufweist, in der Versorgungsleitungen verlaufen können. Im unteren Bereich weist die Gerätesäule eine Mehrfachsteckdose und eine Verbindung zu einer Stangenanordnung auf, wobei die einzelnen Stangen der Stangenanordnung rechtwinklig zueinander mittels Klemmelementen aneinander befestigt sind und Aufnahmen, wie Haken und so weiter, besitzen, um daran medizinische Geräte, wie Überwachungsgeräte, Infusionspumpen und so weiter, befestigen zu können. Bei der Montage wird die Länge der Gerätesäule der entsprechenden Raumhöhe angepasst.

Der Erfindung liegt die Aufgabe zugrunde, ein Versorgungssystem der eingangs genannten Art zu schaffen, das einfach aufgebaut ist, eine sichere Funktion garantiert und preisgünstig erstellt werden kann.

Diese Aufgabe wird erfindungsgemäß dadurch gelöst, dass der Deckenkanal von einer Höhenverstelivorrichtung verstellbar gehalten ist, die mindestens eine Kolbenzylindereinheit zum Verlagern und Halten des Deckenkanals aufweist, wobei der Deckenkanal als Horizontalkanal ausgebildet und - in horizontaler Stellung - mittels der Höhenverstellvorrichtung absenkbar oder von dieser nach oben verfahrbar ist, dass die Medienanschlüsse an unteren Endbereichen von in Richtung auf die Arbeitsplätze weisenden, vom Deckenkanal ausgehenden, als Vertikalsäulen ausgebildete Säulen angeordnet sind, die als ihre relative Lage zum Deckenkanal nicht verändernde Starrsäulen ausgebildet sind. Aufgrund der erfindungsgemäßen Ausgestaltung lässt sich der Deckenkanal und damit die diesem Kanal zugeordneten Medienanschlüsse absenken beziehungsweise hochfahren, das heißt, die Höhenverstellbarkeit der Medienanschlüsse ist dadurch geschaffen, dass der gesamte Deckenkanal auf eine gewünschte Höhe verfahren werden kann. Vorzugsweise ist vorgesehen, dass sich die Medienanschlüsse in Nichtgebrauchsstellung in einer Übergreifhöhe befinden und dass sie in Gebrauchsstellung auf eine Greifhöhe abgesenkt werden. Unter "Greifhöhe" ist eine Höhe zu verstehen, die für eine erwachsene, stehende, mittelgroße Person erreichbar ist. Da für die Höhenverstellbarkeit der gesamte Deckenkanal abgesenkt beziehungsweise hochgefahren wird, können die einzelnen Medienanschlüsse in fester Position am Deckenkanal sowie in fester Position an eventuell vorhandenen, am Kanal befestigten, die Medienanschlüsse aufweisenden Einrichtungen angeordnet und auch fest verdrahtet beziehungsweise verrohrt werden, das heißt, flexible Medientransportleitungen, wie sie bei der bekannten Schwenkanordnung des Standes der Technik erforderlich sind, können insoweit entfallen. Eine derartige flexible Ausgestaltung der Medientransportleitungen ist nur in der Übergangszone der Medientransportleitungen zum Deckenkanal als alleinige Einspeisung erforderlich. Am Deckenkanal selber können eine Vielzahl von beabstandet zueinander liegenden, jeweils einem Arbeitsplatz zugeordneten Medienanschlüssen angeordnet sein, das heißt, der Deckenkanal überspannt eine Vielzahl von Arbeitsplätzen.

Erfindungsgemäß ist vorgesehen, dass der Deckenkanal als Horizontalkanal ausgebildet Ist. Mithin wird er -in horizontaler Stellungmittels der Höhenverstellvorrichtung abgesenkt beziehungsweise von dieser nach oben gefahren.

Es ist erfindungsgemäß vorteilhaft, dass die Medienanschlüsse an in Richtung auf die Arbeitsplätze weisenden, vom Deckenkanal ausgehenden Säulen angeordnet sind. Die Säulen sind als Vertikalsäulen ausgebildet. Dabei ist vorgesehen, dass die Medienanschlüsse an den unteren Endbereichen der Säulen angeordnet sind. Aufgrund der Säulen ist es möglich, die Medienanschlüsse in einer tieferen Position relativ zu dem Deckenkanal anzuordnen. Die Säulen sind als Starrsäulen ausgebildet, das heißt, sie verändern ihre Lage relativ zu dem Deckenkanal nicht. Da sich die zwischen den Säulen liegenden Abschnitte des Deckenkanals auf einem Höhenniveau befindet, das höher liegt, als die Position der Medienanschlüsse, besteht nicht die Gefahr eines Hindernisses, das beispielsweise Fluchtwege versperren würde. Die die Medienanschlüsse aufweisenden Säulenenden enden bevorzugt oberhalb von Arbeitstischen, die Teile der erwähnten Arbeitsplätze sind, sodass sie keine Zugangswege behindern. Erfingdungsgemäß ist vorgesehen, dass die Höhenverstellvorrichtung mindestens eine Kolbenzylindereinheit aufweist, um den Deckenkanal beziehungsweise das Kanalsystem zu halten und um es auf die gewünschte Höhe verlagern zu können.

Eine Weiterbildung der Erfindung sieht vor, dass mehrere Deckenkanäle vorhanden sind, die ein Kanalsystem bilden, das mittels der Höhenverstellvorrichtung gehalten und in der Höhe verfahrbar ist. Die Deckenkanäle können winklig zueinander angeordnet sein und eine der Lage der Arbeitsplätze entsprechende Gerüststruktur aufweisen. Das gesamte Kanalsystem wird mittels der Höhenverstellvorrichtung absenkbar beziehungsweise herauffahrbar bewegt, um die den Arbeitsplätzen zugeordneten Medienanschlüsse in die gewünschte Gebrauchsstellung beziehungsweise Nichtgebrauchsstellung verbringen zu können.

Nach einer nicht efindungsgemäßen Ausbildung ist vorgesehen, dass die Höhenverstellvorrichtung mindestens ein flexibles Zugmittel zum Halten des Deckenkanals aufweist. Als flexibles Zugmittel kann beispielsweise ein Stahlseil oder Kunststoffseil oder auch eine Kette zum Einsatz gelangen. Insbesondere kann eine Windenvorrichtung vorgesehen sein, die eine Längenverstellung des flexiblen Zugmittels erlaubt, um auf diese Art und Weise das Absenken beziehungsweise Heraufziehen des Deckenkanals beziehungsweise des Kanalsystems zu ermöglichen. Bevorzugt ist eine Vielzahl von beabstandet zueinander angeordneten Zugmitteln vorhanden, wobei die Zugmittel an beabstandeten Stellen des Deckenkanals oder des Kanalsystems angreifen.

Zusätzlich oder alternativ kann nicht erfindungsgemäß vorgesehen sein, dass die Höhenverstellvorrichtung mindestens eine Zugstange und/oder mindestens einen Schwenkarm aufweist, um den Deckenkanal beziehungsweise das Kanalsystem zu halten und um es auf die gewünschte Höhe verlagern zu können. Die Ausführungen des vorstehenden Absatzes gelten entsprechend.

Die Zeichnungen veranschaulichen die Erfindung anhand eines Ausführungsbeispiels und zwar zeigt:
- Figur 1: eine Draufsicht auf ein Versorgungssystem
- Figur 2: eine Frontansicht auf das Versorgungssystem der Figur 1,
- Figur 3: eine Seitenansicht auf ein Versorgungssystem und
- Figur 4: eine Stirnansicht auf eine Vertikalsäule mit Medienan- schlüssen.

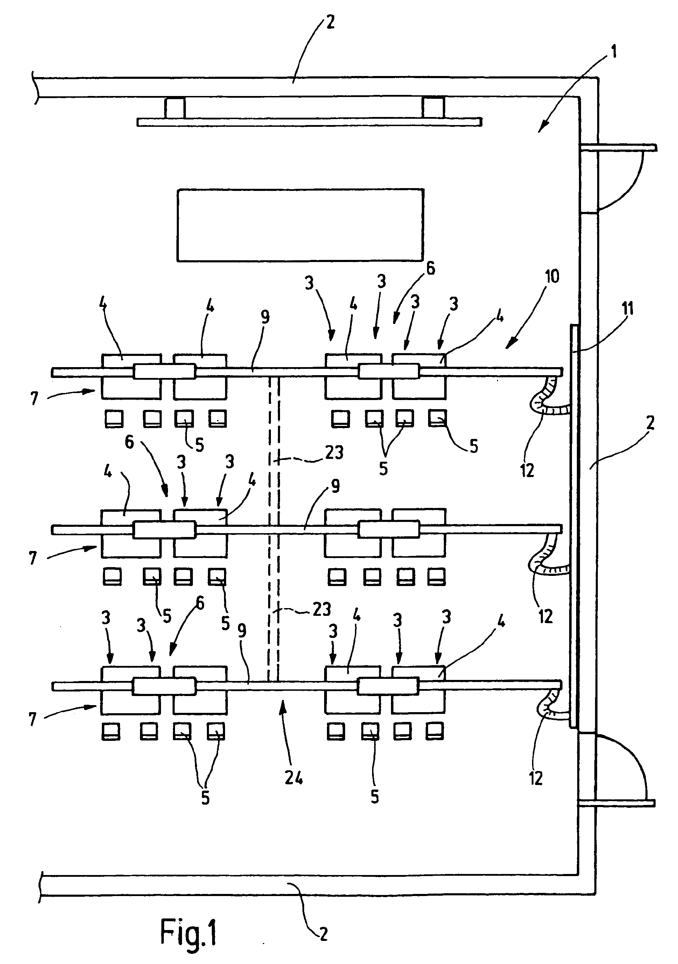

Die Figur 1 zeigt einen Raum 1, der Wände 2 aufweist und beispielsweise als Unterrichtsraum, Laborraum, Werkstattraum oder dergleichen ausgebildet ist. Im Raum 1 sind Arbeitsplätze 3 angeordnet. Es handelt sich dabei um Laborarbeitsplätze oder Arbeitsplätze in einem Technikraum einer Schule oder dergleichen. Jeweils zwei Arbeitsplätze 3 befinden sich an einem Tisch 4, wobei jedem Tisch 4 zwei Stühle 5 zugeordnet sind. Jeweils zwei eng benachbart nebeneinanderstehende Tische 4 bilden eine Doppeltischanordnung 6. Jeweils zwei Doppeltischanordnungen 6 sind nebeneinander aufgestellt, sodass jeweils vier Tische eine Reihe 7 von Arbeitsplätzen 3 bilden, wobei sich im Raum 1 drei Tischreihen befinden und der Raum 1 demzufolge drei Reihen 7 von Arbeitsplätzen 3 aufweist.

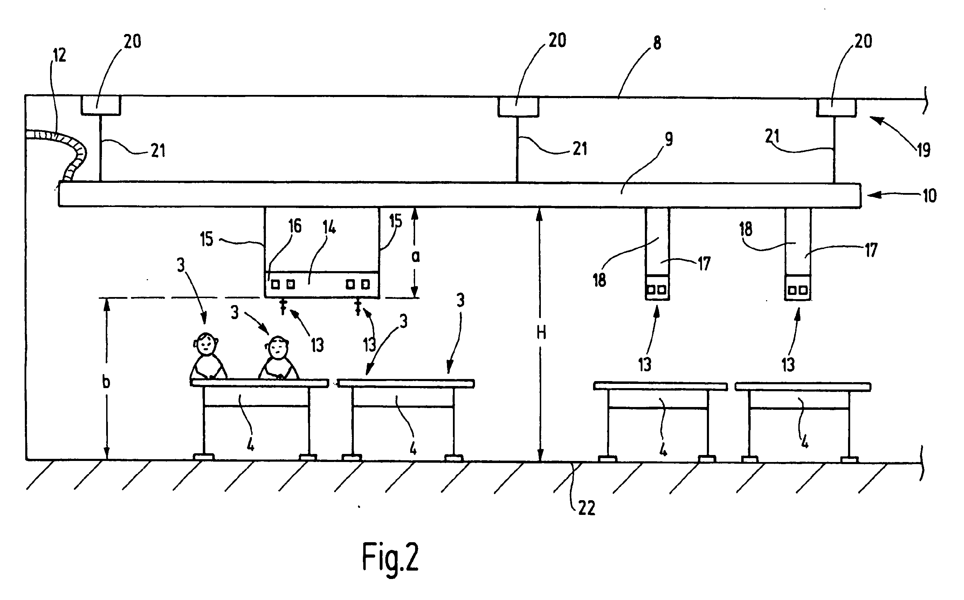

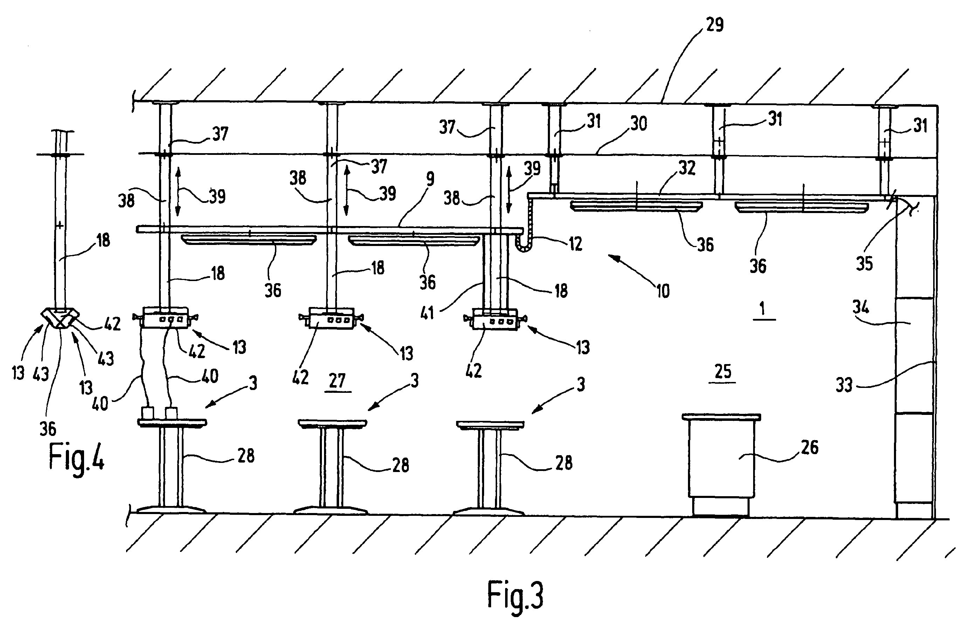

Gemäß der Figuren 1 und 2 verlaufen in Längserstreckung der Reihen 7 unterhalb der Decke 8 des Raumes 1 Deckenkanäle 9, die einem Versorgungssystem 10 zur Bereitstellung von Medien an den Arbeitsplätzen 3 angehören. Die Deckenkanäle 9 können alternativ oder zusätzlich auch quer, insbesondere rechtwinklig, zu der Längserstreckung der Reihen 7 verlaufen. Die Deckenkanäle 9 nehmen Medientransportleitungen auf, die der Zuführung von Medien dienen. Unter dieser Bereitstellung von Medien sind die Versorgung mit beispielsweise Elektrizität. Gas, Antennensignalen, Druckluft und/oder Datensignalen zu verstehen. Die Medientransportleitungen verlaufen innerhalb eines Wandkanals 11 und werden als flexible Versorgungsschlaufen 12 vom Wandkanal 11 den einzelnen Deckenkanälen 9 endseitig zugeführt. Sie verlaufen dann innerhalb der Deckenkanäle 9 bis zu Medienanschlüssen 13. Im Zuge dieser Anmeldung ist unter "Deckenkanal" eine Einrichtung zu verstehen, die der Halterung der Medientransportleitungen dient, wobei es nicht erforderlich ist, die Medientransportleitungen so aufzunehmen, dass sie vom Raum aus nicht sichtbar und/oder wannenförmig umfangen sind. Insofern kann auch ein einfaches Stabtragsystem oder dergleichen die Funktion der Deckenkanäle 9 übernehmen. Die Medienanschlüsse 13 befinden sich gemäß der linken Seite der Figur 2 an einer Traverse 14, die mittels starren Halterungen 15 oder flexiblen Halterungen 15 am Deckenkanal 9 gehalten ist. Die Anordnung ist derart getroffen, dass eine derartige Traverse 14, die vorzugsweise als Horizontaltraverse 16 ausgebildet ist, zwei Tischen 4 zugeordnet ist, sodass insgesamt vier Arbeitsplätze 3 von den Medienanschlüssen 13 der Traverse 14 versorgbar sind. Auf der rechten Seite der Figur 4 ist eine erfindungsgemäße Ausführungsform dargestellt, bei der sich die Medienanschlüsse 13 im unteren Bereich von Säulen 17 befinden, die mit ihren oberen Enden an dem Deckenkanal 9 befestigt sind. Jeweils eine Säule 17, die als Vertikalsäule 18 ausgebildet ist, ist einem Tisch 4 zugeordnet.

Um nun die Medienanschlüsse 13 aus einer Übergreifposition in eine Greifposition verbringen zu können, lässt sich der Deckenkanal 9 mittels einer Höhenverstellvorrichtung 19 absenken beziehungsweise anheben. Die Höhenverstellvorrichtung 19 setzt sich -im Ausführungsbeispiel der Figur 2- aus drei Einzeleinrichtungen 20 zusammen, die jedoch mittels einer gemeinsamen Ansteuerung versehen sind. Die Einzeleinrichtungen 20 sind an der Decke 8 des Raumes 1 befestigt und weisen -nach einer nicht erfindungsgemäßen Ausgestaltung- flexible Zugmittel 21 in Form von Stahlseilen auf, die mittels in den Einzeleinrichtungen 20 enthaltenen Winden in ihrer Länge verstellt werden können, wodurch ein Absenken beziehungsweise Hochziehen der Deckenkanäle 9 und der hinsichtlich der Höhenposition starr daran angeordneten Medienanschlüssen 13 erfolgen kann. Die einzelnen Winden arbeiten -wie bereits erwähnt- mittels einer gemeinsamen Steuereinrichtung, sodass sie synchron arbeiten und gleichmäßig und daher horizontal den Deckenkanal 9 anheben beziehungsweise absenken können. Da sich die Medienanschlüsse 13 aufgrund der Traverse 14 beziehungsweise der Säulen 17 auf tieferer Position als die Unterseite des Deckenkanals 9 befinden, bleiben zwischen den einzelnen Säulen 17 beziehungsweise zwischen benachbarten Traversen 14 Zwischenräume bestehen, die eine hinreichende Kopffreiheit bieten, das heißt, Verkehrswege oder Fluchtwege werden nicht durch den Deckenkanal 9 beziehungsweise die Deckenkanäle 9 versperrt. Insbesondere ist vorgesehen, dass in der abgesenkten Position gemäß Figur 2 der Abstand zwischen dem Fußboden 22 des Raumes 1 und der Unterkante des Deckenkanals 9 das Maß H = 2,20 m beträgt. Der Abstand zwischen der Unterseite des Deckenkanals 9 und der Unterseite der Traverse 14 beziehungsweise der Unterseite der Säule 17 beträgt vorzugsweise das Maß a = 60 cm, sodass der Abstand b zwischen Fußboden 22 und Unterseite der Traverse 14 beziehungsweise der Säule 17 1,60 m beträgt. Wird das System nach oben gefahren, das heißt, werden die Deckenkanäle 9 angehoben, sodass die Medienanschlüsse ihre Nichtgebrauchsstellung einnehmen, so liegt eine entsprechend höhere Position der genannten Teile vor, sodass keine Sichtprobleme zu einer Tafel oder zu einer unterrichtenden Person oder dergleichen bestehen.

Gemäß Figur 1 ist es möglich, dass mehrere Deckenkanäle 9 mittels eines weiteren Deckenkanals 23 miteinander verbunden werden. Der Deckenkanal 23 ist als weitere Ausführungsform gestrichelt in Figur 1 dargestellt. Insgesamt bilden die Deckenkanäle 9 und 23 ein Kanalsystem 24, das mit Hilfe der Höhenverstellvorrichtung 19 als ganzes hoch- und heruntergefahren werden kann, um die Medienanschlüsse 13 auf eine gewünschte Höhenposition verbringen zu können. In einem solchen Falle ist es nicht erforderlich, drei flexible Versorgungsschlaufen gemäß Figur 1 vorzusehen, da es ausreicht, nur einen der drei Deckenkanäle 9 mittels einer flexiblen Versorgungsschlaufe 12 anzuschließen und die Verdrahtung beziehungsweise Verrohrung untereinander dann im Kanalsystem 24 vorzunehmen.

Die Figur 3 zeigt ein Versorgungssystem 10 in einem Raum 1. Der Raum 1 weist einen Lehrerbereich 25 auf, in dem ein Schreibtisch 26 aufgestellt ist. Ferner besitzt der Raum 1 einen Schülerbereich 27, in dem Schülertische 28 vorzugsweise reihenförmig aufgestellt sind. Mit Abstand zur Rohdecke 29 ist eine abgehängte Decke 30 angeordnet. Mittels Deckenstützen 31, die in der Länge starr ausgebildet sind oder bei der Montage auf eine bestimmte Länge einstellbar sind, ist ein Deckenkanal 32 mit Abstand zur abgehängten Decke 30 im Lehrerbereich 25 gehalten. An der Wand 33 des Lehrerbereichs 25 ist ein Versorgungsschrank 34 aufgestellt, von dem Medienversorgungsleitungen kommen, die gemäß dargestellter Übergangzone 35- in den Deckenkanal 32 einmünden. Am Deckenkanal 32 sind Beleuchtungskörper 36 angeordnet. Im Deckenbereich des Schülerbereichs 27 befinden sich als verstellbare Deckenstützen arbeitende, erfindungsgemäße Kolbenzylindereinheiten 37, deren Kolbenstangen 38 gemäß der Doppelpfeile 39 ein- beziehungsweise ausfahrbar sind. In der eingefahrenen Stellung fluchtet ein vom den Kolbenstangen 38 getragener Deckenkanal 9 mit dem Deckenkanal 32. Sollen Vertikalsäulen 18, die an ihren unteren Enden Medienanschlüsse 13 tragen, abgesenkt werden, so wird mittels der Kolbenzylindereinheiten 37 der Deckenkanal 9 abgesenkt, wodurch die am Deckenkanal 9 befestigten Vertikalsäulen 18 in Richtung auf die Schülertische 28, die Arbeitsplätze 3 bilden, bewegt werden. Am Deckenkanal 9 sind mehrere Vertikalsäulen 18 mit Medienanschlüssen 13 angeordnet, so dass der Bereich des Versorgungssystems 10, der sich im Schülerbereich 27 des Raumes 1 befindet, gemeinsam abgesenkt beziehungsweise hochgefahren wird. Am Deckenkanal 9 sind Beleuchtungskörper 36 befestigt, die in Abhängigkeit von dem Absenken beziehungsweise Herauffahren der Deckenkanäle 9 mitbewegt werden. Der Deckenkanal 32 ist mit dem Deckenkanal 9 über eine flexible Versorgungsschlaufe 12 verbunden, so dass die Medienleitungen, die vom Versorgungsschrank 34 kommen über die Übergangszone 35 in den Deckenkanal 32 eingeführt sind und als flexible Versorgungsschlaufe 12 bis zum Deckenkanal 9 verlaufen, dort an der jeweiligen Vertikalsäule 18 nach unten geführt und an die Medienanschlüsse 13 angeschlossen sind. Mittels Verbindungsleitungen 40, die von den Medienanschlüssen 13 bis zu den Arbeitsplätzen 3 geführt werden, lassen sich entsprechende Geräte auf den Schülertischen 28 betreiben. Es ist denkbar, dass die Vertikalsäulen 18 mittels Abdeckmanschetten 41 beziehungsweise Abdeckwänden umgeben sind, so dass im Inneren der Abdeckmanschetten 41 die Versorgungseinleitung von außen nicht! sichtbar verlegt werden können.

Die Figur 4 verdeutlicht eine Stirnansicht auf eine Vertikalsäule 18. Es ist erkennbar, dass ein die Medienanschlüsse 13 tragendes Gehäuse 42 von der Seite gesehen, also gemäß Stirnansicht, im Wesentlichen eine dreieckförmige Kontur aufweist, so dass zumindest einige der Medienanschlüsse 13 an Schrägwänden 43 angeordnet sind.

## Patentansprüche

1. Versorgungssystem zur Bereitstellung von Medien an Arbeitsplätzen, mit den Arbeitsplätzen zugeordneten Medienanschlüssen und mit mindestens einem, eine Vielzahl von Arbeitsplätzen überspannenden, der Halterung von Medientransportleitungen dienenden Deckenkanal, wobei die Medienanschlüsse mit dem Deckenkanal in Verbindung stehen und in ihrer Höhe verstellbar angeordnet sind, und wobei Verbindungsleitungen vorgesehen sind, die von den Medienanschlüssen bis zu den Arbeitsplätzen zum Anschluss entsprechender Geräte geführt sind, **dadurch gekennzeichnet, dass** der Deckenkanal (9) von einer Höhenverstellvorrichtung (18) verstellbar gehalten ist, die mindestens eine Kolbenzylindereinheit zum Verlagem und Halten des Deckenkanals (9) aufweist, wobei der Deckenkanal (9) als Horizontalkanal ausgebildet und - in horizontaler Stellung - mittels der Höhenverstellvorrichtung (19) absenkbar oder von dieser nach oben verfahrbar ist, dass die Medienanschlüsse (13) an unteren Endbereichen von in Richtung auf die Arbeitsplätze (3) weisenden, vom Deckenkanal (9) ausgehenden, als Vertikalsäulen (18) ausgebildete Säulen (17) angeordnet sind, die als ihre relative Lage zum Deckenkanal (9) nicht verändernde Starrsäulen ausgebildet sind.

2. Versorgungssystem nach Anspruch 1, **dadurch gekennzeichnet, dass** mehrere Deckenkanäle (9) vorhanden sind, die ein Kanalsystem (24) bilden, das mittels der Höhenverstellvorrichtung (19) verstellbar gehalten ist.

## Claims

1. A supply system for providing media to work stations, media connections assigned to the work stations and comprising at least one ceiling channel, which spans a plurality of work stations and which serves to hold media transport lines, wherein the media connections are in contact with the ceiling channel and are arranged so as to be height-adjustable, and wherein provision is made for connecting lines, which are guided from the media connections to the work stations for connecting corresponding equipment, **characterized in that** the ceiling channel (9) is held so as to be adjustable by a height-adjusting device (19), which encompasses at least one piston cylinder unit for displacing and holding the ceiling channel (9), wherein the ceiling channel (9) is embodied as a horizontal channel and - in horizontal position - can be lowered by means of the height-adjusting device (19) or can be displaced upwards by it, that the media connections (13) are arranged at lower end areas of columns (17), which point in the direction of the work stations (3), originate from the ceiling channel (9) and are embodied as vertical columns (18), which are embodied as rigid columns, which do not change their relative position to the ceiling channel (9).

2. The supply system according to claim 1, **characterized in that** a plurality of ceiling channels (9) is available, which form a channel system (24), which is held so as to be adjustable by means of the height-adjusting device (19).

## Revendications

1. Système d'alimentation pour la mise à disposition des médias à des postes de travail, avec des raccords de média associés aux postes de travail et avec au moins un canal de plafond recouvrant une pluralité de postes de travail, servant à la fixation de conduites de transport de média, dans lequel les raccords de média sont en liaison avec le canal de plafond et sont disposés de manière réglable en hauteur, et dans lequel des conduites de connexion sont prévues, lesquelles sont guidées des raccords de média jusqu'aux postes de travail pour le raccord à des appareils correspondants, **caractérisé en ce que** le canal de plafond (9) est maintenu de manière réglable avec un dispositif de réglage en hauteur (19) qui présente au moins un module de cylindre à piston pour déplacer et maintenir le canal de plafond (9), le canal de plafond (9) étant réalisé en tant que canal horizontal et pouvant être abaissé en position horizontale au moyen du dispositif de réglage en hauteur (19) ou déplacé de celle-ci vers le haut, que les raccords de média (13) sont disposés à des zones d'extrémité inférieures de colonnes (17) tournées en direction des postes de travail (3), partant du canal de plafond (9), réalisées en tant que colonnes verticales (18) qui sont réalisées en tant que colonnes fixes ne modifiant pas leur position relative par rapport au canal de plafond (9).

2. Système d'alimentation selon la revendication 1, **caractérisé en ce que** plusieurs canaux de plafond (9) sont présents, lesquels forment un système de canaux (24) qui est maintenu de manière réglable au moyen du dispositif de réglage en hauteur (19).
